# FASCICULE DE BREVET EUROPEEN

(11) **EP 2 022 161 B1**
(45) Date de publication et mention de la délivrance du brevet: **11.07.2012**
(21) Numéro de dépôt: 07766028.0
(22) Date de dépôt: 11.05.2007
(51) Int. Cl.: H02M 7/04, H02J 17/00, H01Q 1/00

(54) **CONVERTISSEUR D'ONDE ÉLECTROMAGNÉTIQUE EN TENSION CONTINUE**
VORRICHTUNG ZUR UMWANDLUNG EINER ELEKTROMAGNETISCHEN WELLE IN GLEICHSPANNUNG
DEVICE FOR CONVERTING AN ELECTROMAGNETIC WAVE INTO DC VOLTAGE

(30) Priorité: 12.05.2006 FR 0604264
(43) Date de publication de la demande: 11.02.2009
(73) Titulaire: CENTRE NATIONAL DE LA RECHERCHE SCIENTIFIQUE (CNRS), 75794 Paris Cedex 16 (FR); ECOLE CENTRALE DE LYON, 69131 Ecully Cédex (FR)
(72) Inventeur: VOLLAIRE, Christian, F-69160 Tassin (FR)
(74) Mandataire: Novagraaf Technologies
(86) Numéro de dépôt international: PCT/FR2007/051250
(87) Numéro de publication internationale: WO 2007/132113

(56) Documents cités:
- EP-B1- 0 242 906
- FR-A1- 2 646 739
- US-A- 5 731 691
- US-B1- 6 172 608
- US-B1- 6 427 065

## Description

La présente invention se rapporte au domaine des dispositifs pour convertir une onde électromagnétique, et notamment des micro-ondes en une tension continue.

Elle concerne plus particulièrement un dispositif pour convertir une onde électromagnétique en une tension continue comprenant :
- au moins une antenne apte à convertir ladite onde électromagnétique en un signal électrique d'entrée ;
- un premier filtre apte à filtrer ledit signal électrique d'entrée et générer un signal filtré ;
- un redresseur apte à redresser ledit signal filtré et générer une tension de sortie ;
- un deuxième filtre apte à filtrer ladite tension de sortie de sorte à générer ladite tension continue.

Un tel dispositif est par exemple connu du document de brevet français 2, 646, 739. Dans le brevet précité, le redresseur est constitué d'une seule diode et constitue un redresseur simple alternance.

Un tel dispositif peut être utilisé pour alimenter des appareils à distance. Dans ce cas, des micro-ondes générées par une source de micro-ondes sont reçues par le dispositif de conversion, qui transforme l'onde reçue en une tension continue. Cette tension continue peut être utilisée pour alimenter une charge, par exemple un appareil rechargeable.

D'autre part, l'art antérieur US 6,427,065 décrit un convertisseur AC-DC sur carte à puce.

Ainsi, lorsque des micro-ondes arrivent au niveau de l'antenne, une tension alternative ayant une partie positive et une partie négative est générée. Avec un tel redresseur simple alternance, une partie de l'énergie captée par l'antenne est perdue, ce qui nuit au rendement du dispositif de conversion.

Un tel dispositif est également connu du document de brevet américain US 5,671,133. Dans le brevet précité, le convertisseur est constitué de deux diodes et constitue un doubleur de tension. Ce type de convertisseur fonctionne correctement à vide mais s'avère inefficace pour des fonctionnements en charge. De plus son fonctionnement requiert le chargement de condensateurs ce qui interdit le respect de l'enchaînement des sources requis pour un transfert de puissance optimal.

On connaît également le document US-B-6,427,065 qui décrit un dispositif pour convertir une onde électromagnétique en une tension continue comprenant :
- au moins une antenne apte à convertir ladite onde électromagnétique en un signal électrique d'entrée ;
- un premier filtre apte à filtrer ledit signal électrique d'entrée et générer un signal filtré ;
- un redresseur apte à redresser ledit signal filtré et générer une tension de sortie ;
- un deuxième filtre (6) apte à filtrer ladite tension de sortie de sorte à générer ladite tension continue,
dans lequel le redresseur est un redresseur double alternance.

Le fait d'utiliser un redresseur double alternance permet d'améliorer le rendement du convertisseur.

Toutefois, il est avantageux d'améliorer encore ce rendement.

Un premier but de l'invention est donc d'améliorer le rendement dans un dispositif de conversion d'une onde électromagnétique en une tension continue.

Un autre but de l'invention est de limiter le niveau d'énergie de l'onde électromagnétique à fournir à un convertisseur d'onde électromagnétique en une tension continue, tout en maintenant une énergie électrique satisfaisante.

Au moins un de ces buts est atteint par la présente invention qui concerne, selon un premier aspect, un dispositif pour convertir une onde électromagnétique en une tension continue comprenant :
- au moins une antenne apte à convertir ladite onde électromagnétique en un signal électrique d'entrée ;
- un premier filtre apte à filtrer ledit signal électrique d'entrée et générer un signal filtré ;
- un redresseur double alternance apte à redresser ledit signal filtré et générer une tension de sortie ;
- un deuxième filtre apte à filtrer ladite tension de sortie de sorte à générer ladite tension continue,
dans lequel le premier filtre et le deuxième filtre sont agencés de sorte à respecter un enchaînement des sources en courant et en tension au travers du redresseur.

Grâce à l'agencement du premier filtre et du deuxième filtre respectant l'enchaînement des sources en courant et en tension au travers du redresseur, le rendement du convertisseur est amélioré.

Ce principe est connu dans le domaine de l'électronique de puissance basse fréquence, mais n'a jamais été utilisé dans le cadre d'un convertisseur d'onde électromagnétique en une tension continue. Or, il a été démontré, dans le cadre de l'invention, qu'un tel agencement respectant le principe de la conversion statique de l'énergie électrique au sens de l'électronique de puissance, permet de limiter considérablement les pertes du rendement de conversion.

Selon un premier mode de réalisation, le redresseur est un redresseur direct, le premier filtre est un générateur de tension vu du redresseur et le deuxième filtre est un générateur de courant vu du redresseur.

Selon un deuxième mode de réalisation, le redresseur est un redresseur direct, le premier filtre est un générateur de courant vu du redresseur et le deuxième filtre est un générateur de tension vu du redresseur.

Dans ces deux modes de réalisation, puisque le redresseur est direct, un enchaînement de sources de nature différente, tension-courant ou courant-tension, est bien mis en oeuvre, ce qui permet d'améliorer le rendement de conversion.

Selon un mode de réalisation de l'invention, lequel l'onde électromagnétique est une onde dans le domaine des micro-ondes, et dans lequel l'antenne est agencée pour convertir l'onde micro-ondes. Dans ce domaine de fréquence, le redressement double alternance n'est pas utilisé dans les dispositifs de conversion en une tension continue connus de l'état de la technique.

Ce redresseur double alternance est par exemple un pont de Graëtz uniquement composé de diodes.

Ainsi, en utilisant un redresseur double d'alternance tel qu'un pont de Graëtz en tant que redresseur dans un dispositif de conversion d'une onde électromagnétique en une tension continue, la totalité de l'énergie prélevée par l'antenne est redressée et convertie en énergie continue. Ceci améliore donc le rendement du convertisseur.

Il est connu d'utiliser des diodes notamment dans le domaine des micro-ondes pour réaliser un redressement. Toutefois, dans ce cas, on utilise seulement la caractéristique quadratique des diodes permettant par exemple de transformer une fonction sinus en une fonction sinus carré. Ce procédé est issu des techniques de démodulation. Or, dans cette partie de sa caractéristique, la diode dissipe beaucoup de puissance, ce qui nuit au rendement du dispositif.

Au contraire, un redresseur double alternance tel qu'un pont de Graëtz selon l'invention permet de maintenir un bon rendement pour le dispositif de conversion car les diodes au sein du pont de Graëtz fonctionnent en commutation c'est-à-dire dans une partie de leur caractéristique où les pertes sont faibles.

Un tel pont de Graëtz n'a jamais été utilisé dans des dispositifs de conversion de micro-ondes, en une tension continue en particulier parce que l'utilisation de diodes en commutation n'est pas répandue dans la communauté des micro-ondes car les diodes sont utilisées à des fins de démodulation ce qui conduit à utiliser une autre partie de leur caractéristique.

Les structures de conversion telles que les ponts de Graëtz sont couramment utilisées en basse fréquence mais sans souci d'adaptation d'impédance ce qui revient à rejeter des harmoniques sur le réseau d'alimentation qui est de puissance infinie par rapport à la charge.

Selon un deuxième aspect, l'invention se rapporte à un dispositif pour convertir des micro-ondes en une tension continue. Un tel dispositif de conversion de micro-ondes est plus particulièrement appelé rectenne, ou « rectenna » en langue anglaise. La demande FR 2, 646, 739 précitée concerne plus particulièrement ce domaine technique des rectennes.

Selon ce deuxième aspect, l'invention se rapporte à un dispositif pour convertir des micro-ondes en une tension continue comprenant :
- au moins une antenne apte à convertir les micro-ondes en un signal électrique d'entrée ;
- un premier filtre apte à filtrer ledit signal électrique d'entrée et générer un signal filtré ;
- un redresseur apte à redresser ledit signal filtré et générer une tension de sortie ;
- un deuxième filtre apte à filtrer ladite tension de sortie de sorte à générer ladite tension continue,
dans lequel le redresseur est un redresseur double alternance, notamment un pont comprenant uniquement des diodes en commutation, par exemple un pont de Graëtz.

Un tel dispositif permet en effet déjà, dans le domaine des micro-ondes, d'améliorer le rendement des convertisseurs micro-ondes connus. Dès lors, le dispositif ci-dessus résout le problème de l'amélioration du rendement du convertisseur micro-ondes, et ce indépendamment de l'agencement des filtres décrit ci-dessus respectant l'enchaînement des sources en courant et en tension au travers du redresseur.

Pour un dispositif de conversion micro-ondes, le fait d'améliorer le rendement est particulièrement important au regard des normes empêchant l'émission de micro-ondes au-delà d'une certaine énergie.

L'enchaînement des sources décrit précédemment permet alors, pour un convertisseur micro-ondes du type rectenne, d'améliorer encore le rendement de conversion.

Par ailleurs, le filtrage selon l'invention entre l'antenne et le redresseur par le premier filtre n'est pas envisageable en basses fréquences du fait de la taille des composants dans cette gamme de fréquences. Ce premier filtre permet notamment de réaliser une adaptation d'impédance qui est une préoccupation majeure en fréquences micro-onde afin de pouvoir capter un maximum d'énergie de l'onde incidente avec l'antenne de réception.

Par ailleurs, afin d'améliorer le transfert de puissance entre l'antenne et le redresseur, ledit premier filtre comprend un premier composant électrique d'entrée agencé pour recevoir ledit signal d'entrée, et dans lequel ledit premier composant électrique d'entrée est une inductance.

De la sorte, comme l'antenne est une source de tension, le premier composant rencontré par le courant en sortie de l'antenne est un de type générateur de courant. Cet enchaînement respectant la propriété d'enchaînement des sources, générateur de tension puis générateur de courant permet donc d'améliorer le transfert de puissance.

Par ailleurs, afin d'améliorer le transfert de puissance entre le premier filtre et le deuxième filtre, ledit redresseur est un redresseur direct et ledit premier filtre comprend un composant électrique de sortie, ledit composant électrique de sortie étant une capacité, et ledit deuxième filtre comprend un deuxième composant électrique d'entrée agencé pour recevoir ladite tension de sortie, ledit deuxième composant électrique d'entrée étant une inductance.

De la même façon, ledit redresseur est un redresseur direct et ledit premier filtre comprend un composant électrique de sortie, ledit composant électrique de sortie étant une inductance, et ledit deuxième filtre comprend un deuxième composant électrique d'entrée agencé pour recevoir ladite tension de sortie, ledit deuxième composant électrique d'entrée étant une capacité.

De la sorte, le redresseur étant un redresseur direct, il n'y a pas d'élément d'accumulation d'énergie au sein du redresseur, et l'enchaînement des sources, générateur de tension puis générateur de courant permet donc d'améliorer le transfert de puissance.

En outre, afin d'obtenir un transfert de puissance maximal lorsque le dispositif de conversion est utilisé pour alimenter une charge, l'invention concerne également un équipement électrique comprenant un dispositif tel que précédemment décrit, et une charge apte à être alimentée par ladite tension continue, et ledit premier filtre, ledit redresseur, ledit deuxième filtre et ladite charge forment un ensemble ramené relié à ladite antenne, ledit ensemble ramené ayant une impédance ramené, ladite antenne ayant une impédance d'antenne, ledit ensemble ramené étant dimensionné de sorte que ladite impédance ramenée soit égale à ladite impédance d'antenne.

Ainsi, on choisit les filtres, et notamment les impédances et capacités des filtres, de sorte à réaliser une adaptation d'impédance dans le dispositif. De façon connue en soi, l'égalité de l'impédance ramenée et de l'impédance de l'antenne permet de maximiser le transfert d'énergie entre l'antenne et la charge.

On décrit maintenant un mode de réalisation de l'invention, en référence aux figures annexées dans lesquelles :
- FIG. 1 est un schéma général d'un dispositif convertisseur d'une onde électromagnétique en une tension continue selon l'invention associé à une source électromagnétique micro-onde ;
- FIG. 2 est un schéma électrique d'un exemple de réalisation d'un dispositif convertisseur d'une onde électromagnétique en une tension continue selon l'invention ;
- FIG. 3 est un schéma électrique d'un circuit électrique équivalent au circuit de la FIG. 2 en terme d'impédance ;
- FIG. 4 est un graphique représentant la puissance récupérée aux bornes d'une charge dans un dispositif tel qu'illustré FIG. 1 en fonction de la résistance de charge.

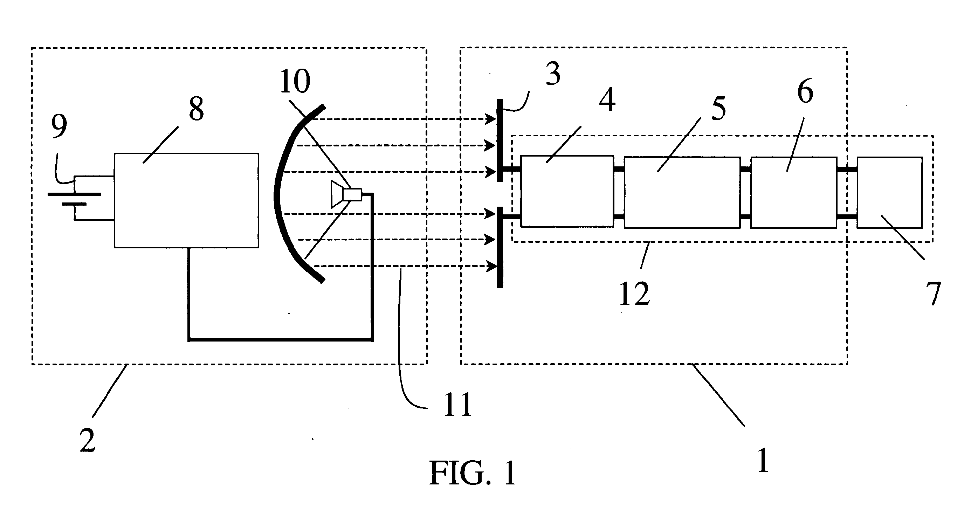

Comme illustré FIG. 1, un dispositif 1 pour convertir une onde électromagnétique 11 en une tension continue comprend une antenne 3. L'antenne 3 est apte à convertir l'onde électromagnétique 11 est un signal électrique alternatif. Une association de plusieurs antennes 3 peut éventuellement être utilisée afin d'augmenter la surface de réception. Le signal électrique alternatif est ensuite transmis dans le dispositif 1 successivement à travers un filtre haute fréquence 4, un redresseur double alternance 5 apte à transformer un signal alternatif en un signal redressé, et un filtre continu 6. En sortie du filtre continu 6, une tension continue est générée. Cette tension continue peut alors être appliquée à une charge 7.

L'onde électromagnétique 11 est par exemple un signal micro-onde 11 généré par un dispositif émetteur 2. Ce dispositif émetteur 2 comprend par exemple un générateur de tension continue 9, une source micro-onde 8, et une antenne émettrice 10. Les micro-ondes générées par l'émetteur 2 ont l'avantage d'être facilement transmises dans un environnement ouvert dans lequel les micro-ondes peuvent ce propager, ce qui rend possible une émission à distance vers le dispositif récepteur 1. Le dispositif émetteur est connu de l'homme du métier et ne sera pas discuté plus en détail par la suite.

Dans le dispositif de réception 1 de l'onde électromagnétique 11, le filtre haute fréquence 4 positionné entre l'antenne 3 et le redresseur 5, a pour fonction d'adapter l'impédance vue par l'antenne. Cette adaptation d'impédance sera discutée plus en détail ci-dessous.

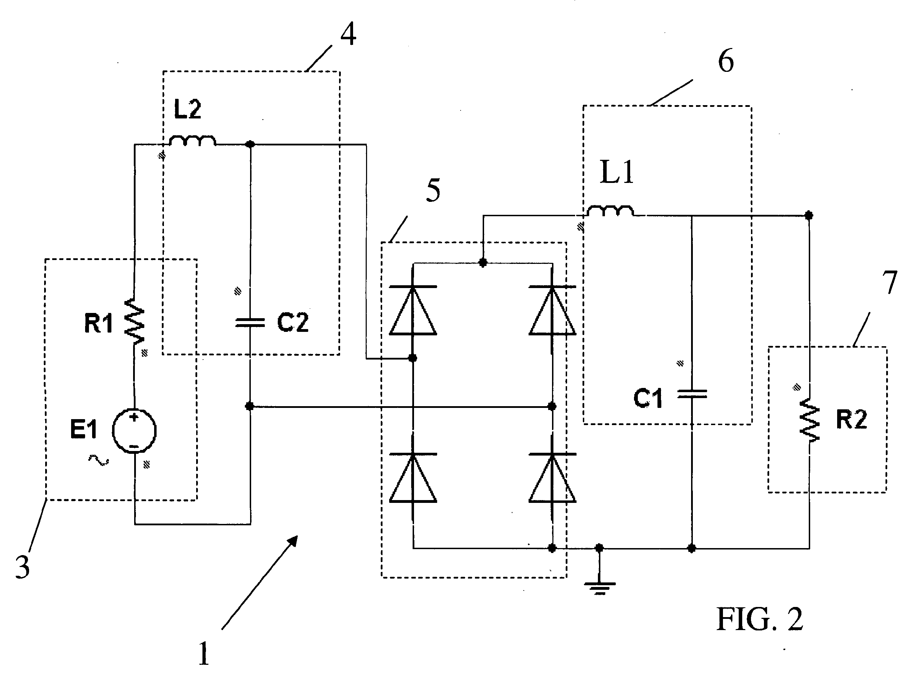

Illustré FIG. 2, on décrit maintenant un mode de réalisation particulier des différents composants électriques du dispositif récepteur 1 de la FIG. 1.

L'antenne 3 peut être modélisé par un générateur de tension E1, et une impédance résistive R1. L'impédance R1 vaut par exemple 50 Ohms.

Le filtre haute fréquence 4 comprend une inductance L2 reliée directement à l'impédance R1 de l'antenne 3, et une capacité C2 positionnée en parallèle de l'antenne 3. Le filtre haute fréquence 4 est un filtre passe-bas. La sortie du filtre haute fréquence 4 est reliée à un redresseur double alternance 5. Ce redresseur double alternance 5 est un pont de Graëtz et comprend un assemblage de quatre diodes, réparties sur deux branches de deux diodes, Les entrées du pont sont situées au niveau de chacune des deux branches. Les diodes de ce redresseur double alternance 5 fonctionnent en commutation de façon connue en soi.

Le filtre continu 6 est positionné en sortie du redresseur 5 et comprend une inductance L1 en série avec le redresseur 5, et une capacité C1 en parallèle avec le redresseur 5. Le filtre 6 est un filtre passe-bas.

Le filtre continu 6 permet de générer une tension continu apte à être fournie à la charge 7 qui peut être modélisée par une résistance R2.

La valeur de la charge 7 est calculée en fonction de la consommation des composants à alimenter par le dispositif 1. Par exemple, pour un composant ayant une consommation de 10 mW sous 5 Volts, on prendra une résistance R2 de 2500 Ohms.

Les capacités C1 et C2, et les inductances L1 et L2 sont positionnées de sorte à respecter le principe de l'enchaînement des sources de sorte à obtenir un transfert de puissance maximal.

Ce principe connu en électronique de puissance, dispose que l'on ne peut connecter directement ou au travers d'un convertisseur direct, c'est-à-dire sans accumulateur d'énergie, que des sources de nature différentes. Si cette condition n'est pas respectée, il est connu que le transfert de puissance n'est pas optimal.

Ainsi, selon l'invention, le générateur E1 et la résistance R1 modélisant l'antenne, constituent un générateur de tension. L'inductance L2 étant positionnée en tête du filtre 4, le filtre 4 est donc vu comme un générateur de courant par l'antenne 3. Ensuite, l'inductance L1 est positionnée en tête du filtre 6, qui est donc vu comme un générateur de courant par le filtre 4, qui est lui-même un générateur de tension en sortie du côté de C2. Le redresseur 5 étant un convertisseur direct, la condition d'enchaînement des sources est bien respectée selon l'invention, ce qui permet d'obtenir un bon transfert de puissance.

Selon d'autres modes de réalisation du dispositif 1, l'ordre des filtres 4 et 6 peut être augmenté, en positionnant d'autres inductance et capacité. Dans ces modes de réalisation, ces inductances et capacités sont également positionnées de sorte à respecter l'enchaînement des sources tension-courant. En particulier, si le composant de sortie du filtre 4 est une inductance, le composant d'entrée du filtre 6 sera une capacité de sorte à respecter cet enchaînement des sources.

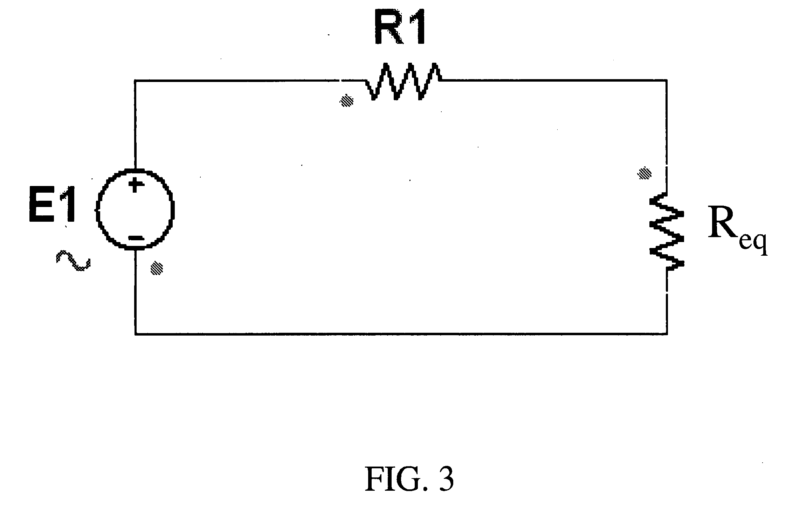

Afin d'améliorer le transfert d'énergie entre l'antenne et la charge, on réalise une adaptation d'impédance du dispositif 1 lorsqu'il est relié à une charge 7. Les capacités C1 et C2 et les inductances L1 et L2 sont donc dimensionnées pour réaliser cette adaptation d'impédance. Illustré FIG. 3, on dimensionne donc les composants du filtre haute fréquence 4, du filtre continue 6, et de la charge 7 de sorte que la résistance équivalente de cet ensemble soit égale à la résistance R1 de l'antenne 3, soit R_{eq}=R1. Illustré FIG. 1, le filtre haute fréquence 4, le redresseur 5, le filtre continu 6 et la charge 7 forment un ensemble ramené 12 ayant une impédance ramenée à adapter.

Du fait des non-linéarités introduites par le redresseur à diodes 5, le calcul des valeurs des composants L1, C1, C2, et L2 ne peut se faire de manière analytique, et l'on utilise de préférence un logiciel de calcul de circuits.

La Demanderesse a déterminé des valeurs des composants L1, C1, L2, et C2 permettant de réaliser une bonne adaptation d'impédance pour une antenne d'impédance interne purement résistive de 50 Ohms.

Les valeurs déterminées par la Demanderesse sont les suivantes :
L1=3.5 nH
C1=48pF
L2=6.2 nH
C2=0.3 pF

Ces valeurs ont été déterminées pour un fonctionnement avec une onde incidente 11 à la fréquence de 2.45 GHz et pour une valeur de R2 de la charge 7 de 500 ohms. La puissance obtenue dans la charge 7 pour une onde incidente 11 d'un module de 130 V/m au niveau de l'antenne est de 73 mW.

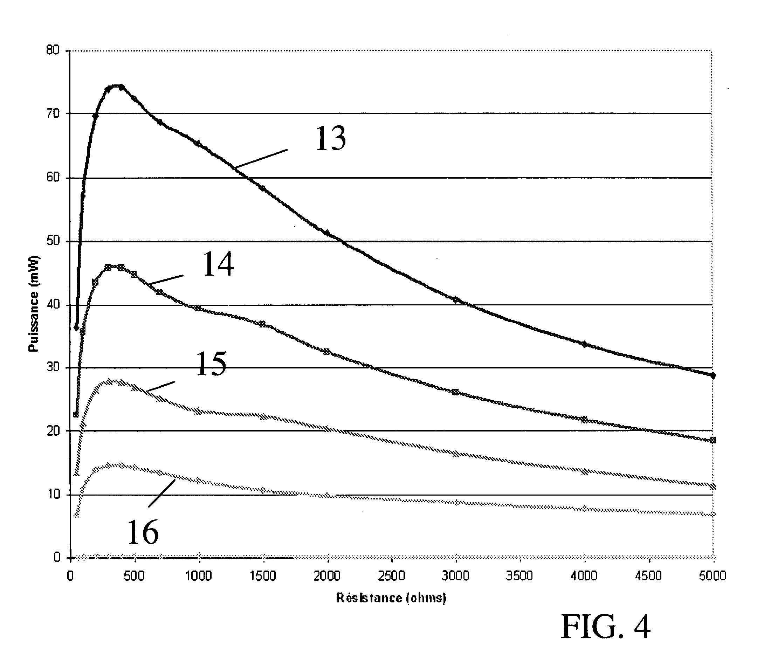

La FIG. 4 est un graphique représentant la puissance récupérée aux bornes de la charge 7 dans le dispositif récepteur 1 tel qu'illustré FIG. 1 en fonction de la résistance R2 de la charge 7.

Sur la FIG. 4, la courbe 13 correspond à un champ incident 11 au niveau de l'antenne 3 de 130 V/m. La courbe 14 correspond à un champ incident 11 au niveau de l'antenne 3 de 100 V/m. La courbe 15 correspond à un champ incident 11 au niveau de l'antenne 3 de 75 V/m. La courbe 16 correspond à un champ incident 11 au niveau de l'antenne 3 de 50 V/m.
L1=3.5 nH
C1=48pF
L2=6.2 nH
C2=0.3 pF

Ces valeurs ont été déterminées pour un fonctionnement avec une onde incidente 11 à la fréquence de 2.45 GHz.

Les rendements obtenus par le dispositif 1 de la présente invention permettent de fournir un générateur de tension continue à partir notamment d'une source de micro-ondes, avec un bon rendement.

L'invention peut notamment être appliquée à l'alimentation à distance et être insérée dans une borne d'énergie pour appareils nomades ou pour de la recharge à distance. Elle peut également être appliquée à l'alimentation des micro-systèmes.

## Revendications

1. Dispositif (1) pour convertir une onde électromagnétique (11) dans le domaine des micro-ondes en une tension continue comprenant :
- au moins une antenne (3) source de tension apte à convertir ladite onde électromagnétique (11) en un signal électrique d'entrée ; connectée à
- un premier filtre (4) haute fréquence passe-bas apte à filtrer ledit signal électrique d'entrée et générer un signal filtré ;connecté à
- un redresseur (5) double alternance apte à redresser ledit signal filtré et générer une tension de sortie, ledit redresseur étant un pont de Graëtz formé de diodes fonctionnant en commutation ; connecté à
- un deuxième filtre (6) passe-bas apte à filtrer ladite tension de sortie de sorte à générer ladite tension continue,
dans lequel le premier filtre (4) et le deuxième filtre (6) sont agencés de sorte à ce que lorsque le premier filtre apparaît comme un générateur de tension pour le redresseur, le deuxième filtre apparaît comme un générateur de courant pour le redresseur, et réciproquement.

2. Équipement électrique comprenant un dispositif pour convertir une onde électromagnétique (11) en une tension continue selon l'une quelconque des revendications précédentes, et une charge (7), ladite charge (7) apte à être alimentée par ladite tension continue, et ledit premier filtre (4), ledit redresseur (5), ledit deuxième filtre (6) et ladite charge (7) formant un ensemble ramené (12) relié à ladite antenne (3), ledit ensemble ramené ayant une impédance ramenée (R_{eq}), ladite antenne (3) ayant une impédance d'antenne (R1), ledit ensemble ramené (12) étant dimensionné de sorte que ladite impédance ramenée (R_{eq}) soit égale à ladite impédance d'antenne (R1).

## Claims

1. Device (1) for converting an electromagnetic wave (11) in the microwave range into a DC voltage comprising:
- at least one voltage source antenna (3) suitable for converting the said electromagnetic wave (11) into an input electrical signal; connected to
- a first high frequency low-pass filter (4) suitable for filtering the said input electrical signal and for generating a filtered signal; connected to
- a full-wave rectifier (5) suitable for rectifying the filtered signal and generating an output Voltage, the said rectifier being a Graetz diode bridge formed by diodes, which function in commutation, connected to
- a second low-pass filter (6) suitable for filtering the said output voltage in order to generate said DC voltage,
in which the first filter (4) and the second filter (6) are arranged in such a way that when the first filter appears as a voltage generator for the rectifier, the second filter appears as a current generator for the rectifier, and vice versa.

2. Electrical equipment comprising a device for converting an electromagnetic wave (11) into a DC voltage according to any one of the preceding claims, and a load (7), the said load (7) able to be supplied by the said DC Voltage, and the said first filter (4), the said rectifier (5), the said second filter (6) and the said load (7) forming a returned assembly (12) connected to the said antenna (3) having a returned impedance (R_{eq}), the said antenna (3) having an antenna impedance (R1), the said returned assembly (12) being sized in such a way that the said returned impedance (R_{eq}) is equal to the said antenna impedance (R1).

## Patentansprüche

1. Vorrichtung zum Umwandeln einer elektromagnetischen Welle (11) im Mikrowellenbereich in eine Gleichspannung, umfassend:
- Zumindest eine Spannungsquellenantenne (3), die eingerichtet ist, die elektromagnetische Welle (11) in ein elektrisches Eingangssignal umzuwandeln, angeschlossen an
- einen ersten Tiefpasshochfrequenzfilter (4), der eingerichtet ist das elektrische Eingangssignal zu filtern und ein gefiltertes Signal zu erzeugen; angeschlossen an
- einen Vollweggleichschichter (5), der eingerichtet ist das gefilterte Signal gleichzurichten und eine Ausgangsspannung zu erzeugen, wobei der Gleichrichter eine Graetz-Brücke ist, die aus Dioden gebildet ist, die durch Umschaltung funktionieren; angeschlossen an
- einen zweiten Tiefpassfilter (6), der eingerichtet ist die Ausgangsspannung zu filtern, um die Gleichspannung zu erzeugen,
in dem der erste Filter (4) und der zweite Filter (6) derart angeordnet sind, dass der erste Filter wie ein Spannungsgenerator für den Gleichrichter erscheint, der zweite Filter wie ein Stromgenerator für den Gleichrichter erscheint und umgekehrt.

2. Elektrische Einrichtung, die eine Vorrichtung zum Umwandeln einer elektromagnetischen Welle (11) in eine Gleichspannung gemäß irgend einem der vorhergehenden Ansprüche aufweist, und eine Last (7), wobei die Last (7) eingerichtet ist mit der Gleichspannung versorgt zu werden, und wobei der erste Filter (4), der Gleichrichter (5), der zweite Filter (6) und die Last eine zurückgeführte Einheit (12) bilden, die mit der Antenne (3) verbunden ist, wobei die zurückgeführte Einheit eine zurückgeführte Impedanz (R_{eq}) aufweist, die Antenne (3) eine Antennenimpedanz (R1) aufweist, wobei die zurückgeführte Einheit (12) derart dimensioniert ist, dass die zurückgeführte Impedanz (R_{eq}) gleich der Antennenimpedanz (R1) ist.
